# EUROPEAN PATENT SPECIFICATION

(11) **EP 3 500 650 B1**
(45) Date of publication and mention of the grant of the patent: **17.06.2020**
(21) Application number: 17751115.1
(22) Date of filing: 17.08.2017
(51) Int. Cl.: C09K 19/38, C09K 19/40, C09K 19/04, G01K 11/16

(54) **STIMULI-RESPONSIVE POLYMER FILM OR COATING, RESPONSIVE DEVICE AND PROCESS FOR PREPARING THE SAME**
REIZEMPFINDLICHER POLYMERFILM ODER -ÜBERZUG, REAKTIVEN VORRICHTUNGEN, SOWIE VERFAHREN ZUR HERSTELLUNG DAVON
REVÊTEMENT OU FILM POLYMÈRE SENSIBLE AUX STIMULI, DISPOSITIFS SENSIBLES ET PROCÉDÉ DE PRÉPARATION ASSOCIÉ

(30) Priority: 17.08.2016 EP 16184490
(43) Date of publication of application: 26.06.2019
(73) Proprietor: Shenzhen Guohua Optoelectronics Tech. Co. Ltd., Shenzhen (CN)
(72) Inventor: KRAGT, Augustinus Jozef Johannes, 6531 DW Nijmegen (NL); BROER, Dirk Jan, 5663 HP Geldrop (NL); SCHENNING, Albertus Petrus Henricus Johannes, 5531 KA Bladel (NL)
(74) Representative: DeltaPatents B.V.
(86) International application number: PCT/EP2017/070836
(87) International publication number: WO 2018/033594

(56) References cited:
- US-A- 5 788 880
- US-A1- 2012 021 141
- XIAOJUAN WU ET AL: "Wide-band reflective films produced by side-chain cholesteric liquid-crystalline elastomers derived from a binaphthalene crosslinking agent", POLYMER, ELSEVIER SCIENCE PUBLISHERS B.V, GB, vol. 52, no. 25, 20 October 2011 (2011-10-20), pages 5836-5845, XP028116012, ISSN: 0032-3861, DOI: 10.1016/J.POLYMER.2011.10.036 [retrieved on 2011-10-24]

## Description

### BACKGROUND

Stimuli-responsive liquid crystal (LC) films have gained interest for various applications, such as decorative purposes, sensors, dynamic interference filters or smart window applications. The liquid crystalline state is called the mesophase and occurs between the crystalline solid state and the isotropic liquid state at distinct temperature ranges. So far, responsive LC systems are based on low molecular weight liquid crystal (LMWLCs) stabilized by an isotropic external polymer matrix or, liquid crystalline (anisotropic) polymer networks using reactive mesogens, which are liquid crystal monomers (RMs) or polymer liquid crystals (PLCs) that form the liquid crystal networks. Mesogens can be seen as disordered solids or ordered liquids showing both solid- and liquid-like properties. LMWLCs are small molecules which are easily switchable, providing a stimulus-responsive LC medium.

### DEFINITIONS

For the purpose of this patent application, unless separately defined hereinbefore or elsewhere in this patent application, terms, including abbreviations used herein, have the meaning as defined hereunder.
'mesogen' refers to a polymerizable liquid crystal
'RM' refers to reactive mesogen.
'chiral' refers to non-superiposable on its mirror image.
'SCLCP' refers to side chain liquid crystalline polymer'
'CLC' or 'ChLC' refers to cholesteric liquid crystal.
'cholesteric liquid crystal' refers to a liquid crystal with a helical structure
'POM' refers to Polarized Optical Microscopy.
'elastomer' refers to a polymer with viscoelasticity, i.e. having both viscosity and elasticity.
'nematic phase' refers to nematic liquid crystal phase characterized by molecules that have no positional order but tend to point in the same direction (along the director)
'isotropic phase' refers to uniformity of molecules in all orientations
'switchable polymer' refers to a stimulus-sensitive polymer capable of undergoing transformation from one phase to another phase or a change in molecular order under influence of a stimulus, e.g. a change in temperature. Such may induce a transition from a cholesteric LC phase to an isotropic phase at a certain temparature.
'cholesteric phase' refers to the nematic state superimposed with a natural twist between layers including the long axis of the molecules induced by the incorporation of a chiral group to give a helical twist to the orientation of the director.
'suitable' refers to what a person skilled in the art would consider technically required for the purpose, which is without undue burden technically feasible and for which no inventive effort or undue experimentation is required to arrive at.

For the definition of other terms, not defined above or hereinafter, reference is made to published patent specifications and/or published scientific papers including theses, in which such terms have already been defined. These can without undue effort be found on the internet.

### PROBLEM

A disadvantage of LMWLCs is that they are volatile. Therefore these systems are limited to closed cells and not suitable for coating applications. For these applications responsive polymer based LCs would seem appealing as they are nonvolatile. RMs can be easily aligned in a three dimensional organization that can be fixed by (photo-) polymerization and the properties can be easily tuned by mixing different RMs in a modular approach. However the responsive properties of these often glassy networks are not large. PLCs such as rubbery polysiloxanes are flexible, which provides a fast and large response to stimuli. However these systems are difficult to align and the responsive properties are difficult to tune.

### SOLUTION

Surprisingly the limitation of the different classes of responsive LCs can be overcome by the development of a responsive film based on mixtures of PLCs and RMs to create a responsive LC material which appears to be easily alignable. That coating shows a large response of which the properties can be tuned in a modular approach. In this way, the advantages of both materials, PLCs and RMs, were combined, yielding thermally stable films, which can be aligned when desired and which stimuli-responsive properties can be tuned by the choice of RMs. Thus mixtures of PLCs with RMs open the doors to a wide variety of stimuli-responsive coating systems, without the need of time consuming trial-and-error synthesis of PLCs. By choosing chiral RMs, cholesteric coatings can for instance be fabricated, while a light responsive RM could provide a light responsive coating. In addition, one could use similar methods as were used for LMWLCs with RMs in closed cells to prepare for example broadband reflectors or patterned coatings.

The present invention therefore relates to a stimuli-responsive polymer film or coating material consisting of an achiral side chain liquid crystalline polymer embedded in a liquid crystal polymer network formed with the use of a reactive mesogen, wherein the achiral liquid crystalline polymer is a side chain liquid crystalline polysiloxane,wherein the reactive mesogen is selected from the group consisting of nematic di-acrylate or a blend of nematic di-acrylate and nematic mono-acrylate monomers, wherein at least one of the acrylate monomers is a chiral molecule, and to a process for preparing the same. Furthermore, the present invention relates to responsive devices or products coated with such films or coatings.

These and other aspects of the invention will be apparent from and elucidated further with reference to the embodiments described by way of examples in the following description and with reference to the accompanying figures.

### PRIOR ART AND ADVANCEMENT OF THE ART BY THE PRESENT INVENTION

In the article "Wide-band refective films produced by side-chain cholesteric liquid-crystaline elastomers from a binaphthalene crosslinking agent" in Polymer 52 (2011) pages. 5836 - 5845 published by Elsevier limited, hereinafter 'the Elsevier article', wide-band reflective films produced by side-chain cholesteric liquid-crystalline elastomers (ChLCEs) derived from a binaphthalene crosslinking are described. The robust broadband reflective films may be attractive for reflective displays, brightness enhancement films and smart switchable reflective windows. According to the Elsevier article the polymer network structure of LCEs is usually produced by the introduction of a crosslinking segment into LC polymer systems. The synthesis and characterization of a crosslinking agent containing binaphthalene group, a cholesteric monomer, and the corresponding side chain ChLCEs are described. The Elsevier article describes a process for the preparation of a multi-responsive polymer liquid crystal composition for use in stimuli-responsive films or coatings by mixing a polymer liquid crystal (PLC), i.e. a ChLCEs polymer liquid crystal and a reactive mesogen (RM), i.e. a cholesteric monomer. Thus preparing a stimuli-responsive polymer networks based on PLCs and RMs in a LC cell for use in stimuli-responsive films or coatings is, in itself known from the Elsevier article.

Document US 5 788 880 A relates to liquid-crystalline organosiloxanes, which contain dianhydrohexitol derivatives as chiral groups. Example 7 of US 5 788 880 A provides a cross-linked polymer film of pentamethyl-cyclopentasiloxane derivatized with either ABChol (cholesteryl ester of 4-allyloxybenzoic acid) or isomannide bis(4-allyloxybenzoate).

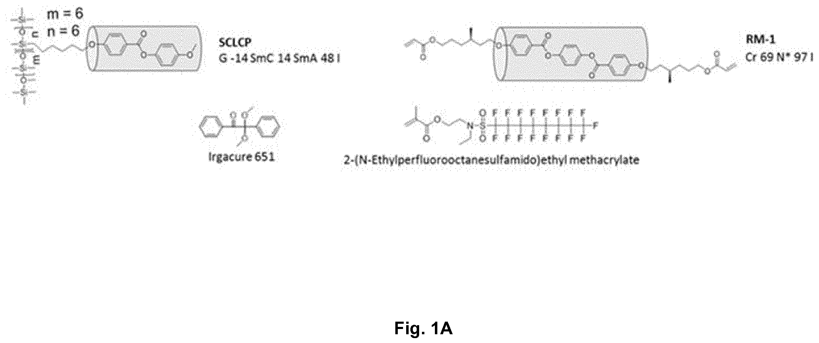

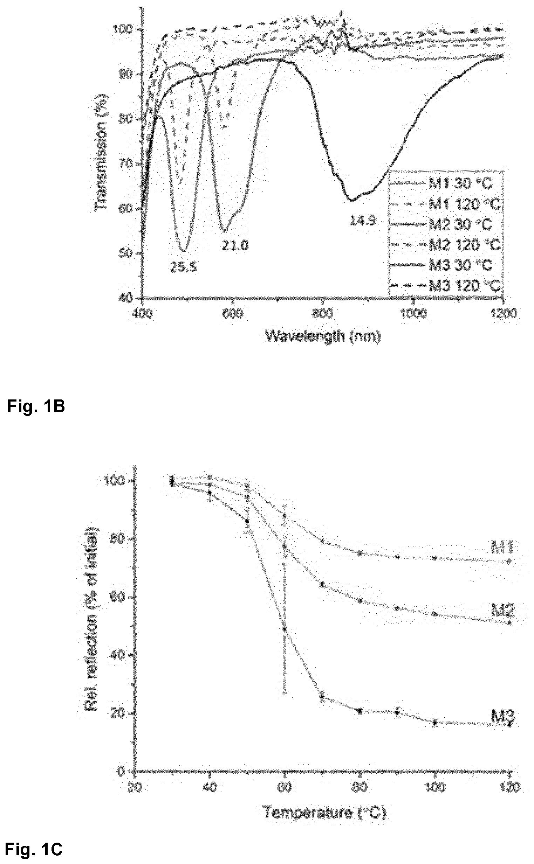

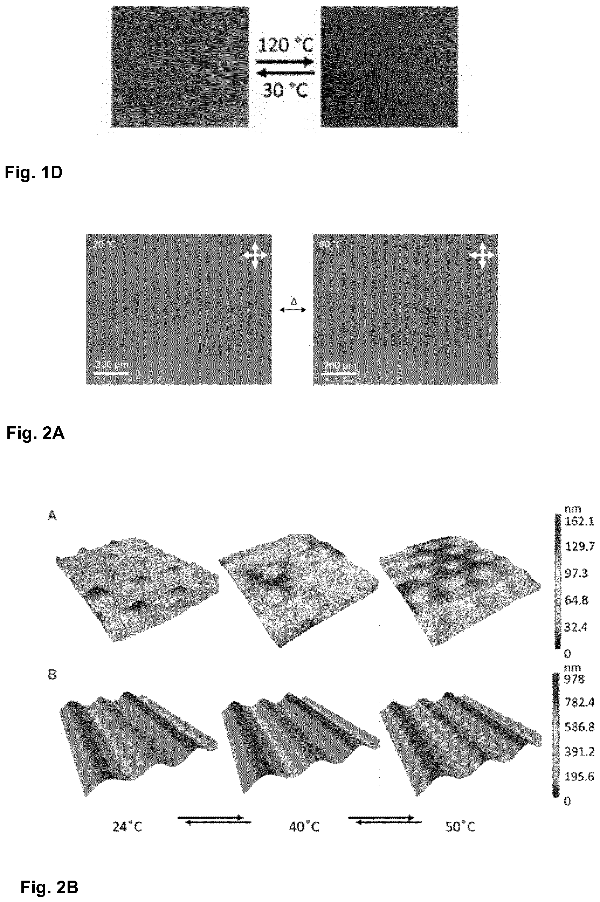

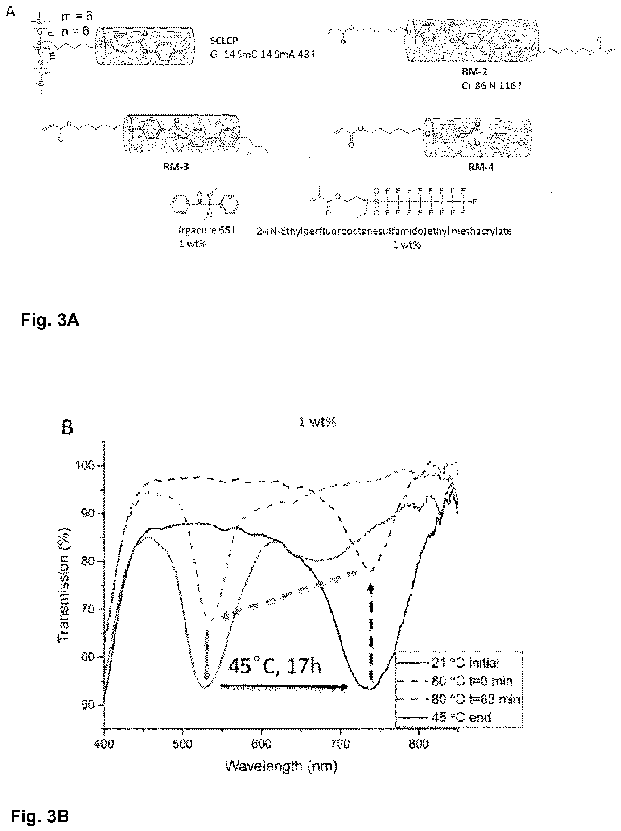

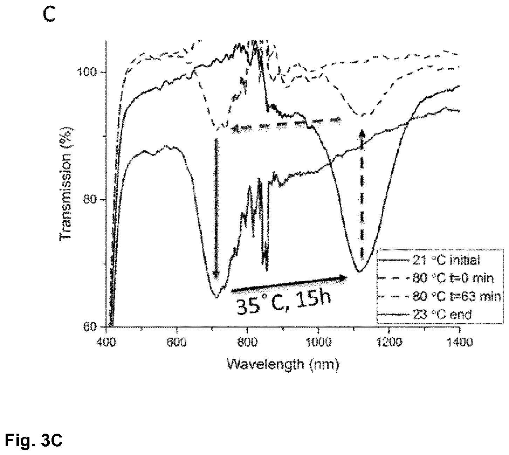

However the choice of the introduction of an RM into an SCLCP, in which one of the components is chiral, by mixing together with some photo inhibitor and surfactant, to prepare a reversible temperature responsive CLC, reflective coating is not known nor can be derived from the Elsevier arcticle. Further the present process exhibits a number of additional features. It shows the possibility to prepare patterned surface topography coatings, as can be done with RMs. The coating was polymerized in the CLC phase with a patterned photomask on top, which blocks the UV light partially and prevent the RMs under the mask to polymerize. Due to depletion of the RMs by photopolymerization, diffusion of RMs from the non-exposed area to the exposed areas takes place resulting in surface topographies with modulated crosslink density. Differences in thermal expansion behaviour for the various areas causes the surface topographies to be temperature responsive. Complex surface topographies could also be made by dual mask exposure. (Fig. 2B). These examples show that the advantages of SCLCPs (thermally stable, large response) and RMs (modular, alignment and patterning) can be combined, which opens doors to a novel class of easy processable stimuli-responsive polymer films and coatings. The opening up of this new class of stimuli-responsive polymer films represents an advancement of the art.

### CLAIMS

The description hereinafter of the claims specifying the exclusive rights on the present invention is deemed to be included in the description of this patent application. These exclusive rights cover also embodiments of the present invention not covered by the explicit wording of the claims but nevertheless forming obvious embodiments of the present invention for a person skilled in the art.

### GUIDANCE OF THE SKILLED PERSON

In order to successfully carry out the present invention the following is provided as guidance. Alternative solutions which can be selected without an undue burden for the person skilled in the art, are covered by the present invention.

### EXAMPLE AND DESCRIPTION OF FIGURES

As an example of the possible systems mentioned hereinabove, a chiral RM was introduced into an achiral SCLCP by mixing (together with some photo initiator and surfactant), to prepare a reversible temperature responsive CLC, reflective coating (Fig. 1A). These mixtures showed a cholesteric to isotropic phase transition around 50°C, independent of the ratio between SCLCP and RM. The reflective wavelength of these mixtures can be tuned by the amount of chiral RM. The mixtures were coated in the CLC phase using an automated gap applicator and cured using UV-light to polymerize the RMs present in the mixture. This results in a coating in which the SCLCP is not crosslinked and therefor it has still the freedom to go to the isotropic phase upon increasing the temperature, resulting in a decrease in reflection (Fig. 1B and 1D). This process appears to be reversible over multiple temperature cycles and stable up to at least 120°C. Further it has been found that the degree of reflection decrease upon heating, depends on the concentration of SCLCP in the system; the more SCLCP, the more material will go to the isotropic phase, the more the reflection decreases (Fig. 1C).

Figure 1(A) - Components used in the mixtures including their individual phase behaviour. G refers to glassy, SmC to smectic C, SmA to smectic A, Cr to crystalline, N* to cholesteric and I to isotropic. 1(B) Vis-IR spectra at 30°C and 120°C for coatings reflecting in green, red and IR The values below the spectra represent the wt% of chiral **RM-1** used in the various mixtures. At 475 nm the sequence of the graphs from bottom to top is; M1 30 °C, M1 120 °C, M3 30 °C, M2 30 °C, M2 120 °C, M3 120 °C.

1(C) The reflection decrease relative to the initial value as a function of temperature averaged over two temperature cycles. 1(D) Photographs of the red reflecting coating at 30 °C and 120 °C on a black background.

By reducing the crosslink density of the network by replacing some diacrylates to monoacrylates the network was able to contract when the SCLCP side chains loses their order and a blue shift occurred. By storing the coatings several hours at a temperature just below the clearing temperature the SCLCP side chains were able to organize themselves thus the reflection band red shifted to some extent By changing the concentration of chiral RM, the initial reflective wavelength could be tuned as well (fig. 3). By varying the concentration of diacrylate and monoacrylate the wavelength range between which the reflection band shift takes place could be influenced. A higher concentration of diacrylates led to a smaller blue shift, but increased the red shifting capabilities of the coatings till a certain plateau. The influence of the monoacrylate concentration showed a similar trend, although the influence is weaker. This way coatings could be prepared with a desired colour change, which is interesting for optical sensor applications.

Coatings were prepared on 3x3 cm glass plates, which show a decrease in reflection upon increasing the temperature. (Fig. 2 A). This process is reversible.

In addition, coatings with temperature responsive surface topographies on 3x3 cm glass plates were prepared. Figure 2 B - 3D images of the temperature responsive surface topographies of a coating obtained by (A) single mask and (B) dual mask photopolymerization induced diffusion.

Figure 3(A) - Components used in the mixtures including their individual phase behavior. G refers to glassy, SmC to smectic C, SmA to smectiv A, Cr to crystalline, N* to cholesteric and I to isotropic. Figure 3(B) Coating prepared from mixture A (SCLCP/RM-2/RM-3/RM-4 77/5/15.8/-) shifting from 735 to 537 nm reversibly. At 525 nm the sequence of the graphs from bottom to top is; 45 °C end, 80 °C t= 63 min, 21 °C initial, 80 °C t= 0 min figure 3(C). Coating prepared from mixture B (SCLCP/RM-2/RM-3/RM-4 77/5/11/5) shifting from 1119 to 731 nm reversibly. At 1100 nm the sequence of the graphs from bottom to top is; 21 °C initial,23 °C end, 80 °C t= 0 min, 80 °C t= 63 min.

So far fast and large responsive, patternable, modular and stable polymer films do not exist. By combining PLCs and RMs it appears to be possible to prepare such polymers.

Using the present process an SCLCP can be embedded in an anisotropic polymer matrix to fabricate a thermally stable coating. This provides a new and easy way to tune the stimuli-responsive properties of SCLCPs over the conventional method of synthesizing SCLCPs with the desired (responsive) properties by trial-and-error. As an example a cholesteric LC RM mixture has been introduced in an achiral SCLCP, resulting in a reversible temperature-responsive coating.

In addition, by mixing RMs with SCLCPs it appears that a facile route can be provided to align SCLCPs using conventional coating methods (e.g. knife coating), which is amongst others necessary for cholesteric reflective coatings. The RM also provides a memory effect for the SCLCP to return to its planar alignment after the stimulus is removed.

Mixing RMs with SCLCPs also opens the possibility to create patterns and gradients in the films. As an example surface topographies with modulated crosslink density using a photo mask during polymerization have been prepared.

A couple of alternatives of stimuli-responsive liquid crystal systems are known, such as micro-encapsulated droplets of cholesteric LMWLC, thermochromic cholesteric LMWLCs in a closed cell environment, or SCLCPs in an external isotropic polymer matrix. The first two are limited to closed systems, while the latter lacks the possibility of cholesteric coatings, since these require alignment. The combination of the advantages of both alternatives has not been found in prior publications.

## Claims

1. Stimuli-responsive polymer film or coating material consisting of an achiral side chain liquid crystalline polymer embedded in a liquid crystal polymer network formed with the use of a reactive mesogen,
wherein the achiral liquid crystalline polymer is a side chain liquid crystalline polysiloxane,
wherein the reactive mesogen is selected from the group consisting of nematic di-acrylate or a blend of nematic di-acrylate and nematic mono-acrylate monomers,
wherein at least one of the acrylate monomers is a chiral molecule.

2. Stimuli-responsive polymer film or coating material according to one or more of the preceding claims in which a suitable photo initiator and a suitable surfactant are mixed together with a chiral side chain liquid crystalline polymer and a reactive mesogen.

3. Stimuli-responsive polymer film or coating material according to one or more of the preceding claims for use in broadband reflectors and/or coatings.

4. Stimuli-responsive polymer film or coating material according to one or more of the preceding claims for use in coatings for self-cleaning and antifouling.

5. Stimuli-responsive polymer film or coating material according to one or more of the preceding claims for coatings that change topography.

6. Stimuli-responsive polymer film or coating material according to one or more of the preceding claims containing a percentage of liquid crystal polymer which is in the range of 5 to 98 w% and preferably in the range of 20 to 90 w%.

7. Stimuli-responsive polymer film or coating material according to one or more of the preceding claims which is processed to a film and cured by photopolymerization.

8. Stimuli-responsive polymer film or coating material according to one or more of the preceding claims in which the switchable polymer has a phase transition from nematic to isotropic at a temperature between 0 and 35 °C.

9. A responsive device or product consisting of a transparent substrate with a coating of a stimuli-responsive polymer film or coating material according to one or more of the preceding claims that switches e.g. reflective to transparent, narrowband to broadband, shifting its wavelength by temperature or by a change in temperature.

10. A responsive device or product consisting of a transparent substrate with a coating of a stimuli-responsive polymer film or coating material according to claim 9 that switches by light exposure or another stimulus.

11. A responsive device or product consisting of a transparent substrate with a coating of a stimuli-responsive polymer film or coating material according to claim 9 or 10 that switches by an electric field.

12. Process for preparing a stimuli-responsive polymer film or coating material according to one or more of the preceding claims, comprising introducing a chiral reactive mesogen into an achiral side chain liquid crystalline polymer by mixing together with a photo-initiator and a surfactant.

## Patentansprüche

1. Ein Reizempfindliches Polymerfilm- oder Überzugsmaterial, bestehend aus einem flüssigkristallinen Polymer mit achiraler Seitenkette, das in ein Flüssigkristallpolymernetzwerk eingebettet ist, das unter Verwendung eines reaktiven Mesogens gebildet wurde,
wobei das achirale flüssigkristalline Polymer ein flüssigkristallines Seitenkettenpolysiloxan ist,
wobei das reaktive Mesogen ausgewählt ist aus der Gruppe, bestehend aus nematischem Diacrylat oder einem Gemisch aus nematischen Diacrylat- und nematischen Monoacrylatmonomeren,
wobei mindestens eines der Acrylatmonomere ein chirales Molekül ist.

2. Der Reizempfindliche Polymerfilm- oder Überzugsmaterial nach einem oder mehreren der vorstehenden Ansprüche, wobei ein geeigneter Photostarter und ein geeignetes Tensid zusammen mit einem flüssigkristallinen Polymer mit chiraler Seitenkette und einem reaktiven Mesogen vermischt worden sind.

3. Der Reizempfindliche Polymerfilm- oder Überzugsmaterial nach einem oder mehreren der vorstehenden Ansprüche zur Verwendung in Breitbandreflektoren und/oder Überzügen.

4. Der Reizempfindliche Polymerfilm- oder Überzugsmaterial nach einem oder mehreren der vorstehenden Ansprüche zur Verwendung in Überzügen zur Selbstreinigung und Antifouling.

5. Der Reizempfindliche Polymerfilm- oder Überzugsmaterial nach einem oder mehreren der vorstehenden Ansprüche für Überzüge, die die Topographie verändern.

6. Der Reizempfindliche Polymerfilm- oder Überzugsmaterial nach einem oder mehreren der vorstehenden Ansprüche, das einen Prozentsatz an flüssigkristallinem Polymer enthält, der im Bereich von 5 bis 98 Gew.-% und vorzugsweise im Bereich von 20 bis 90 Gew.-% liegt.

7. Der Reizempfindliche Polymerfilm- oder Überzugsmaterial nach einem oder mehreren der vorstehenden Ansprüche, das zu einem Film verarbeitet und durch Photopolymerisation gehärtet wird.

8. Der Reizempfindliche Polymerfilm- oder Überzugsmaterial nach einem oder mehreren der vorstehenden Ansprüche, wobei das schaltbare Polymer einen Phasenübergang von nematisch zu isotrop bei einer Temperatur zwischen 0 und 35°C aufweist.

9. Eine Reaktionsfähige Vorrichtung oder Produkt, bestehend aus einem transparenten Substrat mit einem Überzug aus einem reizempfindlichen Polymerfilm- oder Überzugsmaterial nach einem oder mehreren der vorstehenden Ansprüche, das z.B. von reflektierend auf transparent, von schmalbandig auf breitbandig schaltet, wobei seine Wellenlänge durch Temperatur oder durch eine Temperaturänderung verschoben wird.

10. Eine Reaktionsfähige Vorrichtung oder Produkt, bestehend aus einem transparenten Substrat mit einem Überzug aus einem reizempfindlichen Polymerfilm- oder Überzugsmaterial nach Anspruch 9, das durch Belichtung oder anderen Reiz schaltet.

11. Eine Reaktionsfähige Vorrichtung oder Produkt, bestehend aus einem transparenten Substrat mit einem Überzug aus einem reizempfindlichen Polymerfilm- oder Überzugsmaterial nach Anspruch 9 oder 10, das durch ein elektrisches Feld schaltet.

12. Ein Verfahren zur Herstellung eines reizempfindlichen Polymerfilm- oder Überzugsmaterials nach einem oder mehreren der vorstehenden Ansprüche, umfassend das Einführen eines chiralen reaktiven Mesogens in ein flüssigkristallines Polymer mit achiraler Seitenkette durch Zusammenmischen mit einem Photostarter und einem Tensid.

## Revendications

1. Un matériau de revêtement ou film polymère sensible aux stimuli constitué d'un polymère à cristaux liquides à chaîne latérale achiral englobé dans un réseau de polymère à cristaux liquides formé grâce à l'utilisation d'un mésogène réactif,
dans lequel le polymère à cristaux liquides achiral est un polysiloxane à cristaux liquides à chaîne latérale,
dans lequel le mésogène réactif est sélectionné dans le groupe constitué de di-acrylate nématique ou d'un mélange de diacrylate nématique et de monomères monoacrylates nématiques,
dans lequel au moins l'un des monomères acrylates est une molécule chirale.

2. Le matériau de revêtement ou film polymère sensible aux stimuli selon une ou plusieurs des revendications précédentes, dans lequel un photo-initiateur approprié et un tensioactif approprié sont mélangés conjointement avec un polymère à cristaux liquides à chaîne latérale chiral et un mésogène réactif.

3. Le matériau de revêtement ou film polymère sensible aux stimuli selon une ou plusieurs des revendications précédentes pour son utilisation dans des réflecteurs à large bande et/ou des revêtements.

4. Le matériau de revêtement ou film polymère sensible aux stimuli selon une ou plusieurs des revendications précédentes pour son utilisation dans des revêtements à des fins autonettoyantes et anti-salissures.

5. Le matériau de revêtement ou film polymère sensible aux stimuli selon une ou plusieurs des revendications précédentes pour des revêtements dont la topographie change.

6. Le matériau de revêtement ou film polymère sensible aux stimuli selon une ou plusieurs des revendications précédentes contenant un pourcentage de polymère à cristaux liquides qui se situe dans la plage de 5 à 98 % en poids et de préférence dans la plage de 20 à 90 % en poids.

7. Le matériau de revêtement ou film polymère sensible aux stimuli selon une ou plusieurs des revendications précédentes qui est traité en un film et durci par photopolymérisation.

8. Le matériau de revêtement ou film polymère sensible aux stimuli selon une ou plusieurs des revendications précédentes dans lequel le polymère changeant a une transition de phase de l'état nématique à isotrope à une température entre 0 et 35 °C.

9. Un dispositif ou produit sensible constitué d'un substrat transparent doté d'un revêtement d'un matériau de revêtement ou film polymère sensible aux stimuli selon une ou plusieurs des revendications précédentes qui passe, par exemple, d'un aspect réfléchissant à transparent, d'une bande étroite à une bande large, décalant sa longueur d'onde en fonction de la température ou d'un changement de température.

10. Un dispositif ou produit sensible constitué d'un substrat transparent doté d'un revêtement d'un matériau de revêtement ou film polymère sensible aux stimuli selon la revendication 9 qui change en fonction d'une exposition à la lumière ou en fonction d'un autre stimulus.

11. Un dispositif ou produit sensible constitué d'un substrat transparent doté d'un revêtement d'un matériau de revêtement ou film polymère sensible aux stimuli selon la revendication 9 ou 10 qui change selon un champ électrique.

12. Un procédé de préparation d'un matériau de revêtement ou film polymère sensible aux stimuli selon une ou plusieurs des revendications précédentes, comprenant l'introduction d'un mésogène réactif chiral dans un polymère à cristaux liquides à chaîne latérale achiral en le mélangeant conjointement avec un photo-initiateur et un tensioactif.
